# EUROPÄISCHE PATENTSCHRIFT

(11) **EP 2 164 734 B1**
(45) Veröffentlichungstag und Bekanntmachung des Hinweises auf die Patenterteilung: **13.07.2011**
(21) Anmeldenummer: 08758582.4
(22) Anmeldetag: 16.05.2008
(51) Int. Cl.: B60T 13/26, B60T 13/68, B60T 17/22

(54) **BREMSANLAGE FÜR EIN MIT EINEM ANHÄNGER PNEUMATISCH KOPPELBARES NUTZFAHRZEUG UND VERFAHREN ZUM BETREIBEN EINER SOLCHEN BREMSANLAGE IM DEFEKTFALL**
BRAKING SYSTEM FOR A UTILITY VEHICLE THAT CAN BE PNEUMATICALLY COUPLED TO A TRAILER, AND METHOD FOR OPERATING SUCH A BRAKING SYSTEM IN THE EVENT OF DEFECTS
SYSTÈME DE FREINAGE POUR UN VÉHICULE UTILITAIRE POUVANT ÊTRE ACCOUPLÉ PNEUMATIQUEMENT À UNE REMORQUE ET PROCÉDÉ POUR FAIRE FONCTIONNER UN TEL SYSTÈME DE FREINAGE EN CAS DE DÉFAUT

(30) Priorität: 16.05.2007 DE 102007023345
(43) Veröffentlichungstag der Anmeldung: 24.03.2010
(73) Patentinhaber: KNORR-BREMSE Systeme für Nutzfahrzeuge GmbH, 80809 München (DE)
(72) Erfinder: HILBERER, Eduard, 68766 Hockenheim (DE)
(74) Vertreter: Mattusch, Gundula
(86) Internationale Anmeldenummer: PCT/EP2008/003955
(87) Internationale Veröffentlichungsnummer: WO 2008/138641

(56) Entgegenhaltungen:
- EP-A- 1 022 204
- EP-A- 1 780 087
- WO-A-2005/025958

## Beschreibung

Die Erfindung betrifft eine Bremsanlage für ein mit einem Anhänger pneumatisch koppelbares Nutzfahrzeug, mit mindestens einer elektronischen Steuereinheit und einer durch die mindestens eine elektronische Steuereinheit elektrisch schaltbaren Ventileinrichtung, wobei in einem Schaltzustand der mindestens einen Ventileinrichtung Druck für eine Anhängerbremsanlage aufbaubar ist, der eine Bremsung des Anhängers veranlasst.

Die Erfindung betrifft weiterhin ein Verfahren zum Steuern einer Bremsanlage für ein mit einem Anhänger pneumatisch koppelbares Nutzfahrzeug, mit mindestens einer elektronischen Steuereinheit, einer durch die mindestens eine elektronische Steuereinheit elektrisch schaltbaren Ventileinrichtung, wobei in einem Schaltzustand der Ventileinrichtung Druck für die Anhängerbremsanlage aufbaubar ist, der eine Bremsung des Anhängers veranlasst, und einer in einer Anhängersteuerleitung angeordneten Drossel.

Bei der Kopplung von Nutzfahrzeugen mit einem Anhänger müssen üblicherweise auch Versorgungsleitungen zwischen dem Anhänger und dem Nutzfahrzeug verlegt werden. Diese Verbindungsleitungen umfassen zumindest eine pneumatische Versorgungsleitung zur Versorgung der druckluftbetriebenen Anhängerkomponenten sowie eine separate pneumatische Steuerleitung zur Steuerung der Anhängerbremse und verlaufen zunächst von einer EAC beziehungsweise einem Feststellbremsmodul zu einem Anhängersteuermodul. Die Verbindungsleitungen können flexibel sein und unterliegen in natürlicher Weise einem Alterungsprozess, da sie ständig Witterungseinflüssen ausgesetzt sind. Eine Leckage im Bereich dieser Verbindungsleitungen ist daher lediglich eine Frage der Zeit. Ein plötzlich auftretender Druckverlust kann jedoch, insbesondere während der Fahrt, eine Verkehrsgefährdung darstellen, die sich zum Beispiel in einem unkontrollierten Einbremsen des Fahrzeugsgespanns äußern kann. EP 1022204 A, EP 1780087 A und WO 2005/025958 A beschreiben gattungsgemüsse pneumatische Anhängerbremssteuerventile.

Der Erfindung liegt daher die Aufgabe zugrunde, mit möglichst einfachen konstruktiven Mitteln eine Bremsanlage bereitzustellen, die hinsichtlich ihres Betriebsverhaltens bei einem plötzlichen Druckverlust in den Verbindungsleitungen zu einem Anhängersteuermodul verbesserte Betriebseigenschaften aufweist.

Diese Aufgabe wird mit den Merkmalen der unabhängigen Ansprüche gelöst.

Vorteilhafte Ausführungsformen der Erfindung sind in den abhängigen Ansprüchen angegeben.

Die Erfindung baut auf der gattungsgemäßen Bremsanlage dadurch auf, dass eine Drossel in einer Anhängersteuerleitung angeordnet ist, die bei einer Leckage stromabwärts der Drossel einen Druckabfall an einem Steuereingang eines Relaisventils begrenzt. Durch das Vorsehen einer Drossel in der Anhängersteuerleitung kann eine Leckage, bedingt durch die Stauwirkung der Drossel, keinen rapiden Druckverlust stromaufwärts der Drossel verursachen. In Abhängigkeit von der Drosselwirkung und dem stromaufwärts der Drossel nachströmenden Luftvolumen kann sich ein Grenzdruck in dem Bereich stromaufwärts der Drossel einstellen. Dieser kann insbesondere durch das Wählen eines geringen Drosselquerschnitts ausreichend groß sein, um die Bremsanlage des Nutzfahrzeugs weiterhin betätigen zu können. Die Drossel selbst kann beispielsweise in einfacher Weise als eine Bohrung ausgeführt sein.

Insbesondere kann vorgesehen sein, dass die Druckluftversorgung der Bremsanlage über einen Druckbegrenzer erfolgt. Die druckbegrenzte Versorgung der Bremsanlage erlaubt eine Reduzierung der Überlast an den einzelnen Federspeicherbremszylindern.

Nützlicherweise ist vorgesehen, dass ein Rückschlagventil stromabwärts des Druckbegrenzers zur gemeinsamen Absicherung der Feststellbremse des Nutzfahrzeugs und der Anhängerfeststellbremssteuerung angeordnet ist. Die gemeinsame Absicherung der Feststellbremse und der Anhängerfeststellbremssteuerung ist eine einfache Form der Absicherung im Leckagefall gegenüber anderen Druckluftverbrauchern.

Es kann vorgesehen sein, dass die Druckluftversorgung der Feststellbremse des Zugfahrzeugs parallel zur Druckluftversorgung der Anhängerfeststellbremssteuerung erfolgt. Durch die parallele Druckluftversorgung der Feststellbremse des Zugfahrzeugs und der Anhängerfeststellbremssteuerung ist eine voneinander unabhängige Ventilauslegung möglich. Insbesondere können die Ventile zur Anhängerfeststellbremssteuerung für ein geringeres Luftvolumen ausgelegt sein.

Es ist möglich, dass ein Drucksensor den Steuerdruck für die Anhängerbremsanlage erfasst und ein entsprechendes Signal an die elektronische Steuereinheit übermittelt. Durch den Drucksensor ist ein durch eine Leckage verursachter Druckabfall innerhalb des Nutzfahrzeugs selbst detektierbar.

Gemäß einer bevorzugten Ausführungsform ist vorgesehen, dass ein Halteventil zwischen der mindestens einen elektrisch schaltbaren Ventileinrichtung und einem Relaisventil angeordnet ist. Da bei einer Leckage dauerhaft Luftvolumen über die Drossel entweichen kann, muss ständig Luft nachgefördert werden, um den Druck zur Ansteuerung des Relaisventils bereitzustellen. Durch das Schließen des Halteventils kann der Steuerdruck für das Relaisventil auch unabhängig von der Leckage aufrechterhalten werden.

Die Erfindung baut auf dem gattungsgemäßen Verfahren dadurch auf, dass ein bei einer stromabwärts der Drossel eingetretenen Leckage auftretender Druckabfall durch die Drossel begrenzt wird, wobei ein Steuereingang eines Relaisventils stromaufwärts von der Drossel angeordnet ist.

Auf diese Weise werden die Vorteile und Besonderheiten der erfindungsgemäßen Bremsanlage auch im Rahmen eines Verfahrens umgesetzt. Dies gilt auch für die nachfolgend angegebenen besonders bevorzugten Ausführungsformen des erfindungsgemäßen Verfahrens.

Dieses ist in nützlicher Weise dadurch weiterentwickelt, dass bei einer eingetretenen Leckage eine dem Steuereingang vorgeordnete Ventileinrichtung geschlossen wird, um einen Druckabfall an dem Steuereingang zu vermeiden.

Weiterhin kann vorgesehen sein, dass die mindestens eine elektrisch schaltbare Ventileinrichtung eine Druckluftnachförderung unterbricht, um bei einer eingetretenen Leckage einen kontinuierlichen Luftverlust zu stoppen. Durch das Unterbrechen der Druckluftluftnachförderung, zum Beispiel durch das Schließen der elektrisch schaltbaren Ventileinrichtung, wird der ständige Druckverlust über die Drossel beendet.

Es ist weiterhin bevorzugt, dass parallel zur Ausgabe des Drucksignals an den Steueranschlüssen ein entsprechendes elektrisches Steuersignal über einen CAN-Bus gesendet wird. Wird parallel zu dem Drucksignal ein entsprechendes elektrisches Steuersignal an den Anhänger beziehungsweise das Anhängersteuermodul gesendet, so wird eine Redundanz erzeugt, die den Betrieb der Anhängerbremsanlage auch bei einer Leckage der pneumatischen Steuerleitung erlaubt.

In diesem Zusammenhang kann weiterhin vorgesehen sein, dass das elektrische Steuersignal und das Drucksignal miteinander verglichen werden und dass eine Leckage über den CAN-Bus gemeldet wird, falls die Signale nicht äquivalent sind. Durch den Vergleich der beiden Signale ist ein Druckabfall in der pneumatischen Steuerleitung detektierbar, falls keine Fehlermeldung für das elektrische Steuersignal vorliegt und das pneumatische Steuersignal eine geringere Bremswirkung für die Feststellbremse vorgibt als das elektrische Signal.

Als weitere Sicherheitsmaßnahme ist es dann möglich, dass bei nicht äquivalenten Signalen das elektrische Signal zur Steuerung des Anhängers herangezogen wird.

Es ist dann besonders nützlich, dass bei einer eingetretenen Leckage ein elektrisches Signal an das Steuergerät gesendet wird, um ein Einbremsen des Anhängers zu reduzieren beziehungsweise zu verhindern. Ist ein Betätigen der Bremsanlage des Anhängers nicht mehr oder nur noch eingeschränkt möglich, so kann es vorteilhaft sein, auf eine Streckbremsfunktionalität zu verzichten, die über die Bremsanlage des Anhängers realisiert wird. Dies gilt insbesondere, da davon auszugehen ist, dass die für die Streckbremsung erforderliche Bremswirkung der Anhängerfeststellbremse nicht eingehalten werden kann.

Weiterhin kann es nützlich sein, dass eine Fehlerausgabe an den Fahrer des Nutzfahrzeugs erfolgt, wenn eine Leckage detektiert wird. Durch die Fehlerausgabe an den Fahrer kann dieser seine Fahrweise an den vorliegenden Defekt anpassen, die defekte Verbindungsleitung austauschen oder eine Werkstatt zur Behebung des Fehlers aufsuchen.

In diesem Zusammenhang ist auch von Nutzen, dass ein Fehlereintrag in einem Fehlerspeicher erfolgt, wenn eine Leckage detektiert wird.

Vorzugsweise ist zum Erkennen eines Defekts vorgesehen, dass eine Leckage in einer Anhängersteuerleitung über einen stromaufwärts der Drossel angeordneten Drucksensor detektiert wird.

Es kann aber auch vorgesehen sein, dass eine Leckage in einer Anhängersteuerleitung über einen in einem Anhängersteuermodul angeordneten Drucksensor detektiert wird. Ein Defekt, das heißt ein Leitungsbruch, kann dann angenommen werden, wenn der Anhänger anfängt einzubremsen, obwohl der Inhalt des CAN-Datenprotokolls als Status der elektrisch betätigbaren Feststellbremse (ECPB) kein Einbremsen anzeigt. Das Einbremsen ist dann lediglich über die Raddrehzahlsensoren des Anhängers detektierbar.

Alternativ ist auch denkbar, dass eine Leckage in einer Anhängersteuerleitung über an einem Anhänger angeordnete Raddrehzahl detektiert wird.

Im Zusammenhang mit der Erfindung kann auch eine Bremsanlage für ein mit einem Anhänger pneumatisch koppelbares Nutzfahrzeug, mit mindestens einer elektronischen Steuereinheit, einer durch die mindestens eine elektronische Steuereinheit elektrisch schaltbaren Ventileinrichtung, wobei in einem Schaltzustand der Ventileinrichtung Druck für die Anhängerbremsanlage aufbaubar ist, der eine Bremsung des Anhängers veranlasst, und einem Drucksensor, der den Druck für die Anhängerbremsanlage erfasst und ein entsprechendes Signal an die elektronische Steuereinheit übermittelt, wobei der Druck für die Anhängerbremsanlage von der elektronischen Steuereinheit durch gepulstes Schalten der Ventileinrichtung unter Berücksichtigung des von dem Drucksensor erfassten Drucks für die Anhängerbremsanlage beeinflussbar ist und wobei dass die elektronische Steuereinheit das gepulste Schalten zum Herbeiführen einer Bremsung des Anhängers bei nicht aktiver Betriebsbremse des Zugfahrzeugs nur dann zulässt, wenn eine Bedingung vorliegt, bei der eine Bremsung des Anhängers trotz nicht aktiver Betriebsbremse des Zugfahrzeugs sinnvoll sein könnte, und eine solche Streckbremsung von einem Signalgeber angefordert wird, nützlich sein. Diese Bremsanlage stellt somit eine Art Filter zur Verfügung, der dafür sorgt, dass außerhalb von tatsächlich erwünschten und sinnvollen Streckbremsphasen keine unnötige Ansteuerung der Schaltventile erfolgt. Die Schaltventile sind also nicht mehr immer dann, wenn der Fahrer des Nutzfahrzeugs einen entsprechenden Wunsch über einen Signalgeber äußert, einer ständigen gepulsten Ansteuerung ausgesetzt, was sich positiv auf die Lebensdauer der angesteuerten Magnetventile und der Bremsen auswirkt. Die gepulste Ansteuerung kann beispielsweise pulsweitenmoduliert zu einer Variation des zu beeinflussenden Drucks führen, und diese Bremsanlage wird im Rahmen der vorliegenden Offenbarung ohne Einschränkung der Allgemeinheit vorwiegend am Beispiel der Pulsweitenmodulation erläutert. Bei dem erwähnten Druck für die Anhängerbremsanlage kann es sich um einen Steuerdruck handeln, auf dessen Grundlage der eigentliche Bremsdruck für die Anhängerbremsanlage erzeugt wird.

Insbesondere kann vorgesehen sein, dass die Bedingung dem Vorliegen mindestens eines der folgenden Zustände entspricht: Die Fahrzeuggeschwindigkeit ist kleiner als ein Schwellenwert, das Gaspedal wird nicht betätigt, der Motor bremst, der Motor erzeugt kein nutzbares Drehmoment, ein Retardersystem ist aktiv, das Fahrzeug befindet sich auf einer Gefällestrecke. Ein solcher Fahrzustand liegt während einer Dauerbremsung häufig vor, da hier das Zugfahrzeug durch den Motor und das Retardersystem gebremst wird, während der Anhänger nicht gebremst wird. Das Retardersystem und die Motorbremse werden auch als Dauerbremsen bezeichnet. Diese werden häufig durch einen separaten Geber oder Schalter zugeschaltet, wobei diese Schalter meist stufbar geschaltet sind. Es sind auch Anordnungen bekannt, bei welchen die Motorbremse unabhängig vom Retardersystem eingeschaltet werden kann, wobei jedoch meistens eine kombinierte Beeinflussbarkeit und eine damit einhergehenden Abstimmung der Systeme aufeinander vorliegen. Häufig ist vorgesehen, die Dauerbremsverzögerung auf die Verzögerung einer vorangegangenen Betriebsbremsbremsung automatisch abzustimmen. Der Signalgeber für die Streckbremsung kann separat vorgesehen sein oder mit dem Geber für die Motorbremsung beziehungsweise die Retarderbremsung kombiniert werden. Ebenfalls ist es möglich, die Handsteuereinheit für eine elektrische Feststellbremse mit einer Zusatzfunktion auszustatten, so dass hierüber das Signal für das Einleiten einer Streckbremsung erzeugt werden kann. Die Bedingung für das Zulassen der Streckbremsung kann auf dieser Grundlage an die charakteristischen Fahrzustände des Fahrzeugs gekoppelt werden. Dabei ist es möglich, lediglich eine oder aber auch mehrere, insbesondere alle der genannten Fahrzustände zu berücksichtigen. Beispielsweise kann verhindert werden, dass eine pulsweitenmodulierte Ansteuerung der Schaltventile, das heißt der Magnetventile, erfolgt, wenn sich das Fahrzeug mit einer hohen Geschwindigkeit bewegt, bei der keine Streckbremsfunktion erfolgen sollte. Es kann weiterhin vorgesehen sein, dass bei betätigtem Gaspedal eine Streckbremsfunktion in jedem Fall verhindert wird, denn es ist unwahrscheinlich, dass in einem solchen Zustand ein Auflaufen des Anhängers auf das Zugfahrzeug erfolgen könnte. Weiterhin kann ein Kriterium für das Zulassen der Streckbremsung sein, dass der Motor bremst, da dies eine typische Fahrsituation kennzeichnet, die eine Streckbremsung sinnvoll oder erforderlich erscheinen lässt. Weiterhin kann, insbesondere über das Motorsteuergerät, geprüft werden, ob der Motor ein nutzbares positives Drehmoment erzeugt. Ist dies nicht der Fall, so ist dies ein Kriterium dafür, die Streckbremsung zuzulassen. Durch kombiniertes Dauerbremsen unter Verwendung eines Retardersystems, kann ebenfalls eine Verzögerung des Nutzfahrzeugs herbeigeführt werden. Ist ein solches Retardersystem aktiv, so kann es sinnvoll sein, eine Streckbremsung zuzulassen. Ebenfalls kann geprüft werden, ob sich das Fahrzeug auf einer Gefällestrecke befindet, wobei diese Prüfung auf der Grundlage einer Neigungssensorik oder von Navigationsdaten erfolgt. Ergibt diese Überprüfung, dass kein Gefälle vorliegt, so kann auch die pulsweitenmodulierte Ansteuerung der Schaltventile unterdrückt werden. Bei der Steuerung der Streckbremsfunktion können auch die Raddrehzahlen von Zugfahrzeug und Anhänger sowie der Lenkwinkel berücksichtigt werden. Beispielsweise kann auf der Grundlage eines Schlupfvergleiches zwischen dem Anhänger und dem Zugfahrzeug festgestellt werden, dass ein Auflaufen des Anhängers auf das Zugfahrzeug bevorsteht. Die Berücksichtigung des Lenkwinkels kann sinnvoll sein, da bei unterschiedlichen Lenkwinkeln das Fahrzeug durch eine Streckbremsung in unterschiedlicher Weise beeinflusst wird. Im Hinblick auf das Fahrverhalten des Nutzfahrzeugs kann es auch sinnvoll sein, die von einem E-Differential bewirkte unterschiedliche Lastverteilung auf eine Dauerbremsung, die insbesondere vom Motor und einer Retarderbremse herbeigeführt wird, zu berücksichtigen. Bei einem E-Differential handelt es sich um ein stufenloses Differential zur Abstimmung von Motorbeschleunigungsmomenten an die durch die Räder auf die Fahrbahn aufbringbaren Kräfte. Ein E-Differential verteilt die Radkräfte in sinnvoller Weise individuell auf die verschiedenen Räder. Es ist sinnvoll, im Anschluss an eine Dauerbremsung bei einer Beschleunigung des Fahrzeugs durch Betätigen des Gaspedals, den Zug möglichst schnell zu strecken und die Motordrehzahl nicht in einen Bereich abfallen zu lassen, bei der der Motor unter Umständen absterben könnte. In diesem Zusammenhang kann erwünscht sein, die Streckbremse vor dem Übergang zur erneuten Beschleunigung des Zuges zu lösen, wodurch insgesamt die Bauteilebeanspruchung reduziert wird. Weitere Beachtung kann der Wegsensorik der Fahrwerksregelung und der Luftfederung beigemessen werden, die zusammen mit dem Lenkwinkel und dem Schlupf bei Kurvenfahrt einen Anhaltspunkt über die Schubkräfte des Anhängers bei aktivierter Dauerbremsung geben. Moderne Fahrzeuge haben außerdem häufig eine Aktivlenkung, die beim Streckbremsvorgang der Steuerelektronik Lenkwinkelsignale zur Verfügung stellen kann, um so eine automatische Lenkwinkelkorrektur vorzunehmen. Auf dieser Grundlage kann ein Streckbremsvorgang frühzeitig beendet werden, um auch hierdurch die Beanspruchung der Bauteile herabzusetzen sowie die Fahrstabilität zu verbessern. Ist weiterhin eine aktive Stossdämpferregelung vorhanden, so kann ein Überführen des Stossdämpfers zu einem höheren Härtegrad hilfreich sein, um Wankbewegungen zu verhindern und um auch auf diese Weise einen Streckbremsvorgang schneller beenden zu können, wobei auch hierdurch eine Beanspruchung der steuernden Bauteile, das heißt der Ventile und der Bremsen, herabgesetzt und die Fahrstabilität verbessert wird.

Nützlicherweise ist vorgesehen, dass der Ventileinrichtung ein Druckbegrenzer vorgeschaltet ist. Ein Druckbegrenzer ist sinnvoll, da die Anzahl der erforderlichen Schaltzyklen aufgrund des Erfordernisses häufigeren und feinfühligeren Taktens mit zunehmendem Versorgungsdruck ebenfalls ansteigt. Durch den Druckbegrenzer wird also ein vorteilhafter Einfluss auf die Lebensdauer der Ventile erzielt.

Es kann vorgesehen sein, dass die Ventileinrichtung ein 3/2-Wegeventil ist. Auf dieser Grundlage kann eine Belüftungs- und Entlüftungsfunktion mit einem einzigen Ventil realisiert werden.

Ebenfalls kann vorgesehen sein, dass die Ventileinrichtung zwei 2/2-Wegeventile umfasst. Dann dient eines der 2/2-Wegeventile der Entlüftung, während mit dem anderen belüftet wird. Wird keines der Ventile betätigt, so wird der Druck gehalten, wobei aufgrund der kritischen Fahrsituation während einer Streckbremsung sehr häufig be- und entlüftet wird.

Es ist möglich, dass die Ventileinrichtung den Steuerdruck direkt zur Verfügung stellt. Eine solche beispielsweise als Magnetventil ausgelegte Ventileinrichtung muss einen ausreichenden Strömungsquerschnitt zur Verfügung stellen.

Ebenfalls ist es denkbar, dass die Ventileinrichtung ein Relaisventil ansteuert, welches den Steuerdruck zur Verfügung stellt. Die indirekte Bereitstellung des Steuerdrucks durch die pulsweitenmoduliert angesteuerte Ventileinrichtung über ein Relaisventil ist nützlich, da die pulsweitenmoduliert angesteuerten Schaltventile dann unabhängig von dem für die Streckbremsung erforderlichen Steuerdruck dimensioniert und ausgelegt werden können. Die Druckpulse werden in der Steuerkammer des Relaisventils zu einem mittleren Druck integriert, welcher dann als Steuerdruckvorgabe der Anhängerbremsanlage zugeführt wird.

Es ist aber auch denkbar, dass die Ventileinrichtung in eine elektropneumatische Steuereinheit integriert ist, welche die Feststellbremse des Zugfahrzeugs und die Anhängerbremsanlage über ein Anhängersteuermodul pneumatisch steuert.

In diesem Zusammenhang ist dann nützlich, dass in einem Leitungsstrang der elektronpneumatischen Steuereinheit, der mit einem Federspeicherzylinder der Feststellbremse des Zugfahrzeugs und mit einem Steuereingang des Anhängersteuermoduls in Verbindung steht, mindestens eine Drossel vorgesehen ist, die bei einem Druckabbau im Bereich des Steuereingangs des Anhängersteuermoduls einen Druckabbau in dem Federspeicherzylinder verzögert. Da die elektropneumatische Steuereinheit sowohl den Steuereingang des Anhängersteuermoduls als auch die Feststellbremszylinder mit der Druckluftversorgung koppelt, könnte ein Druckverlust im Bereich des Anhängersteuermoduls ein schlagartiges Zusammenbrechen des Drucks in allen damit in Verbindung stehenden Leitungen der elektropneumatischen Steuereinheit bewirken, so auch im Bereich des Federspeicherzylinders. Dies hätte zur Folge, dass das Zugfahrzeug schlagartig durch die Feststellbremse gebremst wird. Dies wird verhindert, indem durch Drosselung ein Druckabbau im Bereich der Federspeicherzylinder verlangsamt wird.

Darauf aufbauend kann dann noch vorgesehen sein, dass ein unerwarteter Druckabbau im Bereich des Steuereingangs des Anhängersteuermoduls durch den Drucksensor erfassbar ist und der Druck in dem Federspeicherzylinder der Feststellbremse durch Umschalten eines Ventils gehalten werden kann. Der Drucksensor, welcher auch im Zusammenhang mit der pulsweitenmodulierten Ansteuerung der Ventileinrichtung verwendet wird, kann also eingesetzt werden, um ein unerwartetes Absinken des Druckes im Bereich des Anhängersteuermoduls zu erfassen und dann den Federspeicherzylinder durch Umschalten einer Ventileinrichtung von der Drucksenke abzutrennen. In Kombination mit der Druckdrosselung kann so unabhängig vom Umschalten und einer Druckerfassung zunächst der Druckabbau im Federspeicherzylinder verlangsamt und bei Bedarf dann durch Umschalten des Ventils vollständig gestoppt werden.

Nützlicherweise kann vorgesehen sein, dass der mindestens einen elektronischen Steuereinheit ein von einem manuell bedienbaren Signalgeber erzeugbares Signal zuführbar ist und in Abhängigkeit der Anwesenheit des Signals die Streckbremsfunktion unterdrückbar ist. Dem Fahrer wird so die Möglichkeit gegeben, die Streckbremsfunktionalität des Nutzfahrzeugs von vorn herein abzuschalten.

Weiterhin kann vorgesehen sein, dass der mindestens einen elektronischen Steuereinheit ein von einem manuell auf verschiedene Weise betätigbaren Signalgeber erzeugbares variables Signal zuführbar ist, wobei mindestens eine Eigenschaft des Signals von der Betätigungsweise des Signalgebers abhängt und die mindestens eine Eigenschaft des Signals das Bremsverhalten des Anhängers beeinflusst. Insbesondere kann ein Geber vorgesehen sein, der über unterschiedliche Wege betätigt werden kann. Der aufgebaute Druck für die Anhängerbremse kann so von dem Geberweg abhängig beeinflusst werden.

Ebenfalls kann vorgesehen sein, dass der mindestens einen elektronischen Steuereinheit ein von einem manuell betätigbaren Signalgeber erzeugbares Signal zuführbar ist, wobei die Betätigungszeit des Signalgebers das Bremsverhalten des Anhängers beeinflusst. So kann beispielsweise vorgesehen sein, dass bei längerer Geberbetätigung ein höherer Druck aufgebaut wird.

Nützlicherweise ist weiterhin vorgesehen, dass Raddrehzahlsensoren vorgesehen sind, deren Signale der mindestens einen elektronischen Steuereinheit zuführbar sind, und dass die im Zusammenhang mit der Bedingung für das Zulassen eines gepulsten Schaltens der Ventileinrichtung herangezogene Fahrzeuggeschwindigkeit aus Signalen der Drehzahlsensoren ableitbar sind. Beispielsweise kann auf der Grundlage eines Schlupfvergleiches zwischen dem Anhänger und dem Zugfahrzeug festgestellt werden, dass ein Auflaufen des Anhängers auf das Zugfahrzeug bevorsteht. Seitens des Zugfahrzeugs können zusätzlich das Tachosignal oder Daten eines Navigationssystems als Korrekturwerte hinzugezogen werden. Die Verwendung von aktiven Raddrehzahlsensoren ermöglicht insbesondere bei kleinen Drehzahlen die Bereitstellung sehr gut verarbeitbarer Werte, so dass ein schnelles Stabilisieren des Fahrzeugs ermöglicht wird.

Es kann weiterhin vorgesehen sein, dass die Anhängerbremsanlage Scheibenbremsen aufweist. Dies ist insbesondere in Kombination mit aktiven Raddrehzahlsensoren sinnvoll, da Scheibenbremsen eine sensitive Druckrücknahme und eine verbesserte Dosierbarkeit mit geringer Hysterese insbesondere bei kleinen Fahrzeuggeschwindigkeiten ermöglichen. Besonders bei schwierigen Fahrbahnverhältnissen, beispielsweise mit Splitt (U-Splitt), kann so ein unerwünschtes Blockieren der Räder vermieden werden.

Im Zusammenhang mit dem erfindungsgemäßen Verfahren kann auch ein Verfahren zum Steuern einer Bremsanlage für ein mit einem Anhänger pneumatisch koppelbares Nutzfahrzeug, mit mindestens einer elektronischen Steuereinheit, einer durch die mindestens eine elektronische Steuereinheit elektrisch schaltbaren Ventileinrichtung, wobei in einem Schaltzustand der Ventileinrichtung Druck für die Anhängerbremsanlage aufbaubar ist, der eine Bremsung des Anhängers veranlasst, und einem Drucksensor, der den Druck für die Anhängerbremsanlage erfasst und ein entsprechendes Signal an die elektronische Steuereinheit übermittelt, wobei der Druck für die Anhängerbremsanlage von der elektronischen Steuereinheit durch gepulstes Schalten der Ventileinrichtung unter Berücksichtigung des von dem Drucksensor erfassten Drucks für die Anhängerbremsanlage beeinflusst wird und wobei die elektronische Steuereinheit das gepulste Schalten zum Herbeiführen einer Bremsung des Anhängers bei nicht aktiver Betriebsbremse des Zugfahrzeugs nur dann zulässt, wenn eine Bedingung vorliegt, bei der eine Bremsung des Anhängers trotz nicht aktiver Betriebsbremse des Zugfahrzeugs sinnvoll sein könnte, und eine solche Streckbremsung von einem Signalgeber angefordert wird, vorteilhaft sein.

Auf diese Weise werden die Vorteile und Besonderheiten der zuvor besprochenen Bremsanlage auch im Rahmen eines Verfahrens umgesetzt. Dies gilt auch für die nachfolgend angegebenen besonders bevorzugten Ausführungsformen des Verfahrens.

Dieses ist in nützlicher Weise dadurch weitergebildet, dass die Bedingung dem Vorliegen mindestens eines der folgenden Zustände entspricht: die Fahrzeuggeschwindigkeit ist kleiner als ein Schwellenwert, das Gaspedal wird nicht betätigt, der Motor bremst, der Motor erzeugt kein nutzbares Drehmoment, ein Retardersystem ist aktiv, das Fahrzeug befindet sich auf einer Gefällestrecke.

Weiterhin kann vorgesehen sein, dass ein unerwarteter Druckabbau im Bereich des Steuereingangs des Anhängersteuermoduls durch den Drucksensor erfasst wird und der Druck in dem Federspeicherzylinder der Feststellbremse durch Umschalten eines Ventils gehalten wird.

Es ist weiterhin bevorzugt, dass eine Temperatur im Bereich der Anhängerbremsanlage erfasst wird und beim Überschreiten einer vorgegebenen Temperaturschwelle der Druck für die Anhängerbremsanlage verringert wird. Dabei handelt es sich um eine Sicherheitsmaßnahme, auf deren Grundlage die Belastung der Anhängerbremsanlage und der Ventile reduziert wird.

In diesem Zusammenhang kann weiterhin vorgesehen sein, dass eine Temperatur im Bereich der Anhängerbremsanlage erfasst wird und beim Überschreiten einer vorgegebenen Temperaturschwelle eine Streckbremsung unterbunden wird.

Es kann eine weitere Sicherheitsmaßnahme ergriffen werden, nämlich dadurch dass eine Zeit erfasst wird, während der eine Streckbremsung durchgeführt wird, und dass beim Überschreiten einer vorgegebenen Zeitschwelle eine weitere Streckbremsung unterbunden wird. Auch hierdurch wird eine mögliche Überlastung der an der Streckbremsung beteiligten Komponenten verhindert.

Ebenfalls kann vorgesehen sein, dass während einer Streckbremsung die Aktivität der Betriebsbremse des Zugfahrzeugs überwacht wird und dass bei Aktivierung der Betriebsbremse des Zugfahrzeugs eine weitere Streckbremsung unterbunden wird. Eine Streckbremsung im speziellen Sinne ist dann nicht mehr erforderlich, da das Bremssystem des Nutzfahrzeugs insgesamt aktiviert ist und den Zug in einem gestreckten Zustand halten wird.

Es ist besonders nützlich, dass während einer Streckbremsung die Drehzahl des Motors des Nutzfahrzeugs überwacht wird. Diese Drehzahlüberwachung kann beispielsweise vom Motorsteuergerät des Nutzfahrzeugs vorgenommen werden, wobei diesbezügliche Informationen an die für die Streckbremsung verantwortliche elektronische Steuereinheit übertragen werden. Eine solche Drehzahlüberwachung ist nützlich, da durch die Streckbremsung die Drehzahl in einem ungünstigen Fall in einen Bereich abfallen kann, bei der ein Absterben oder Abwürgen des Motors zu erwarten ist. Dies ist zu verhindern, da dann alle oder nahezu alle funktionellen Elemente des Fahrzeugs in eine Back-up-Betriebsart übergehen, indem beispielsweise von einer elektronischen Steuerung zu einer pneumatischen Steuerung übergegangen wird, so dass nur noch eine sehr eingeschränkte Funktionalität der gesamten Bremsanlage zur Verfügung steht. In kritischen Fahrsituationen wird hierdurch die Manövrierfähigkeit beeinträchtigt.

In diesem Zusammenhang kann nützlich sein, dass bei einem Unterschreiten einer vorgegebenen Drehzahlschwelle der Druck für die Anhängerbremsanlage verringert wird.

Weiterhin kann vorgesehen sein, dass bei einem Unterschreiten einer vorgegebenen Drehzahlschwelle die Kraftstoffzuführrate für den Motor des Nutzfahrzeugs erhöht wird.

Als Maßnahme gegen ein Absterben des Motors kann weiterhin vorgesehen sein, dass bei einem Unterschreiten einer vorgegebenen Drehzahlschwelle der Ladedruck eines Turboladers verringert wird.

Weiterhin ist es möglich, dass bei einem Unterschreiten einer vorgegebenen Drehzahlschwelle dem Motor des Nutzfahrzeugs Druckluft aus einem Druckluftbehälter einer Druckluftanlage des Nutzfahrzeugs zugeführt wird.

Ein Abwürgen des Motors kann auch dadurch verhindert werden, dass bei einem Unterschreiten einer vorgegebenen Drehzahlschwelle eine Kupplung in einem Antriebsstrang des Nutzfahrzeugs zumindest teilweise auskuppelt.

Es kann ebenfalls vorgesehen sein, dass bei einem Unterschreiten einer vorgegebenen Drehzahlschwelle ein Getriebe des Nutzfahrzeugs in eine Getriebestellung mit verringerter Übersetzung überführt wird.

Als weitere Maßnahme gegen ein Abwürgen des Motors kann vorgesehen sein, dass bei einem Unterschreiten einer vorgegebenen Drehzahlschwelle die Wirkung des Retardersystems des Nutzfahrzeugs verringert wird.

Ebenfalls kann dienlich sein, dass ein zum Zwecke einer Motorbremsung zwischen Hubräumen verschiedener Zylinder des Motors angeordnetes Bypass-Ventil zumindest teilweise geschlossen wird. Durch ein solches Bypass-Ventil wird während einer Motorbremsung Kompressionsarbeit verrichtet, indem ein Überströmen des komprimierten Volumens in den ansaugenden Kolben gestattet wird. Indem das Bypass-Ventil bei einem übermäßigen Drehzahlabfall geschlossen wird, kann die Wirkung der Motorbremsung herabgesetzt werden.

Weiterhin kann vorgesehen sein, dass eine Drosselklappe in einem Abgasstrom des Motors von einer drosselnden in eine weniger drosselnde Stellung überführt wird.

Wie im Zusammenhang mit dem Bremssystem bereits beschrieben wurde, kann das Verfahren in nützlicher Weise dadurch weitergebildet sein, dass der mindestens einen elektronischen Steuereinheit ein von einem manuell bedienbaren Signalgeber erzeugtes Signal zugeführt wird und in Abhängigkeit der Anwesenheit des Signals die Streckbremsfunktion unterdrückt wird.

Ebenfalls ist es nützlich, dass der mindestens einen elektronischen Steuereinheit ein von einem manuell auf verschiedene Weise betätigbaren Signalgeber erzeugtes variables Signal zugeführt wird, wobei mindestens eine Eigenschaft des Signals von der Betätigungsweise des Signalgebers abhängt und die mindestens eine Eigenschaft des Signals das Bremsverhalten des Anhängers beeinflusst.

Das Verfahren kann auch dadurch günstig weitergebildet werden, dass der mindestens einen elektronischen Steuereinheit ein von einem manuell betätigbaren Signalgeber erzeugtes Signal zugeführt wird, wobei die Betätigungszeit des Signalgebers das Bremsverhalten des Anhängers beeinflusst.

Es ist ebenfalls möglich, dass Raddrehzahlsensoren vorgesehen sind, deren Signale der mindestens einen elektronischen Steuereinheit zugeführt werden, und dass die im Zusammenhang mit der Bedingung für das Zulassen eines gepulsten Schaltens der Ventileinrichtung herangezogene Fahrzeuggeschwindigkeit aus Signalen der Drehzahlsensoren abgeleitet wird.

Die Erfindung wird nun mit Bezug auf die begleitenden Zeichnungen anhand besonders bevorzugter Ausführungsformen beispielhaft erläutert.

Es zeigen:
- Figur 1: einen Teil einer erfindungsgemäßen Bremsanlage;
- Figur 2: eine Diagrammdarstellung zur Erläuterung einer pulsweitenmodulier- ten Ansteuerung einer Ventileinrichtung;
- Figur 3: ein Blockschaltbild zur Erläuterung einer ersten Ausführungsform einer erfindungsgemäßen Bremsanlage;
- Figur 4: ein Blockschaltbild zur Erläuterung einer zweiten Ausführungsform einer Bremsanlage;

- Figur 5: eine Diagrammdarstellung zur Erläuterung einer pulsweitenmodulier- ten Ansteuerung einer Ventileinrichtung;
- Figur 6: eine weitere Ausführungsform einer erfindungsgemäßen Bremsanla- ge und
- Figur 7: ein Flussdiagramm zur Veranschaulichung des erfindungsgemäßen Verfahrens.

Bei der nachfolgenden Beschreibung der Zeichnungen bezeichnen gleiche Bezugszeichen gleiche oder vergleichbare Komponenten.

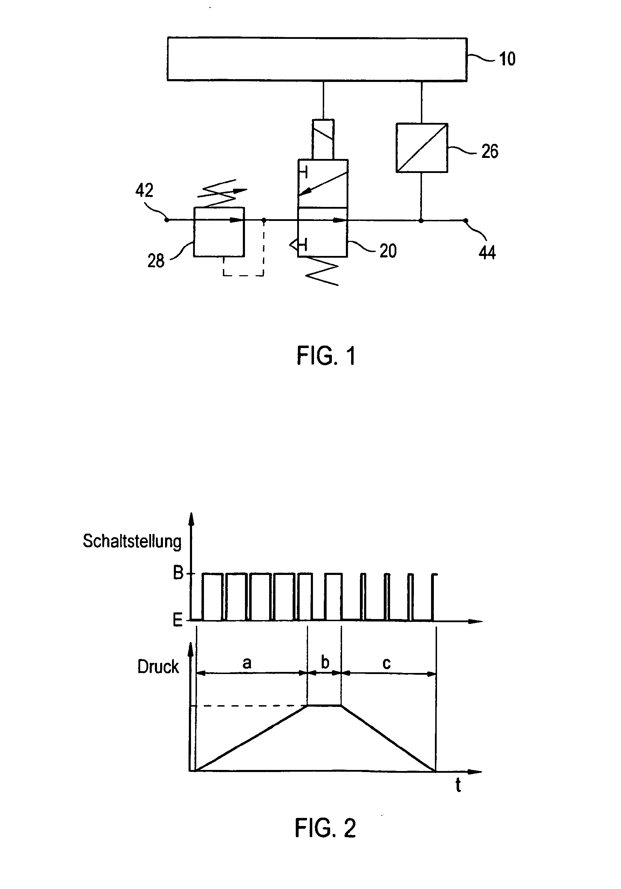

Figur 1 zeigt einen Teil einer erfindungsgemäßen Bremsanlage. Über einen Druckbegrenzer 28 wird einem 3/2-Wegeventil 20 von einer Druckluftversorgung 42 gelieferte Druckluft zugeführt. Ausgangsseitig steht das 3/2-Wegeventil 20 mit einem Anhängersteueranschluss 44 in Verbindung. Der ausgangsseitige Druck des 3/2-Wegeventils 20 ist mit einem Drucksensor 26 erfassbar. Dieser Drucksensor übermittelt die erfassten Informationen an eine elektronische Steuereinheit 10, die in Abhängigkeit hiervon und in Abhängigkeit anderer Bedingungen den Zustand des 3/2-Wegeventils 20 steuert beziehungsweise regelt. Um einen variablen Druck am Anhängersteueranschluss 44 gezielt zur Verfügung zu stellen, kann das 3/2-Wegeventil 20 pulsweitenmoduliert angesteuert werden.

Figur 2 zeigt eine Diagrammdarstellung zur Erläuterung einer pulsweitenmodulierten Ansteuerung einer Ventileinrichtung. Das obere Diagramm zeigt den Schaltzustand der Ventileinrichtung 20 gemäß Figur 1. Im Schaltzustand B befindet sich die Ventileinrichtung 20 in ihrer belüftenden Stellung, während im Schaltzustand E die entlüftende Stellung vorliegt. Beispielsweise ist das 3/2-Wegeventile 20 im Schaltzustand B stromlos und im Schaltzustand E bestromt. Im unteren Diagramm ist die Entwicklung des Drucks am Anhängersteueranschluss 44 gemäß Figur 1 in Abhängigkeit der im oberen Diagramm gezeigten Schaltzustände des 3/2-Wegeventils 20 gezeigt.

Während der Phase a ist das Verhältnis zwischen Belüftungszeit und Entlüftungszeit so abgestimmt, dass eine Druckzunahme stattfindet. Während der Phase b wird das Tastverhältnis für den Schaltzustand zugunsten der entlüftenden Schaltstellung geändert, so dass der Druck am Anhängersteueranschluss 44 gehalten werden kann. Gewinnt die entlüftende Schaltstellung noch einen höheren Zeitanteil gegenüber der belüftenden Schaltstellung, wie dies in der Phase c der Fall ist, so findet eine Druckabnahme statt. Der im unteren Diagramm dargestellte Druck kann je nach Realisierung der vorliegenden Erfindung ein dem Anhängersteuermodul zugeführter Steuerdruck, auf dessen Grundlage der Anhängerbremsdruck beeinflusst wird, oder direkt der Anhängerbremsdruck sein. Im letzten Fall könnte die Druckhaltephase b bei beispielsweise circa 8,5 bar eingestellt werden.

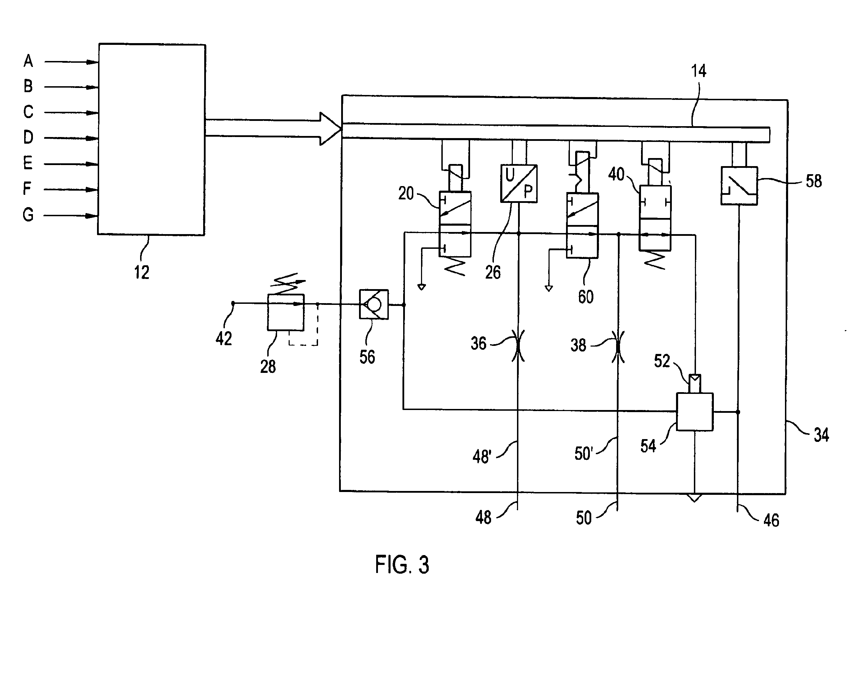

Figur 3 zeigt ein Blockschaltbild zur Erläuterung einer ersten Ausführungsform einer erfindungsgemäßen Bremsanlage. In diesem Beispiel ist die pulsweitenmoduliert steuerbare Ventileinrichtung 20 in eine elektropneumatische Steuereinheit 34 integriert, die sowohl einen Federspeicheranschluss 46 als auch zwei Steueranschlüsse 48, 50, die mit einem Steuereingang eines Anhängersteuermoduls koppelbar sind, aufweist. Vorzugsweise ist die elektropneumatische Steuereinheit 34 geeignet, die Funktionen eines elektronischen Feststellbremssystems zur Verfügung zu stellen. Hierzu enthält die Steuereinheit 34 eine elektronische Steuereinheit 14, die geeignet ist, verschiedene Magnetventile anzusteuern, nämlich die als 3/2-Wegeventil ausgelegte Ventileinrichtung 20 sowie ein als 2/2-Wegeventil ausgebildetes Halteventil 40. In Abhängigkeit der Schaltstellung dieser genannten Ventileinrichtungen 20, 40 wird der Steuereingang 52 eines Relaisventils 54 angesteuert. Dem Relaisventil wird Arbeitsdruck von der Druckluftversorgung 42 über den Druckbegrenzer 28 und ein Rückschlagventil 56 geliefert, der in Abhängigkeit des am Steuereingang 52 anstehenden Steuerdrucks dem Federspeicheranschluss weitergeleitet wird. Ebenfalls ist ein Druckschalter 58 vorgesehen, über den erfassbar ist, ob der Federspeicheranschluss belüftet oder entlüftet ist, also ob die Feststellbremse eingelegt oder gelöst ist. Alternativ kann anstelle des Druckschalters 58 auch ein weiterer Drucksensor verwendet werden, der den genauen Druck bestimmen kann.

In der dargestellten Stellung des als 2/2-Wegeventils ausgebildeten Halteventils 40 kann der Federspeicheranschluss 46 in Abhängigkeit der Stellung des 3/2-Wegeventils 20 belüftet oder entlüftet werden. Wird das Halteventil 40 umgeschaltet, so wird der Druck am Federspeicheranschluss 46 gehalten.

Durch das Zusammenspiel des 3/2-Wegeventils 20 mit dem als 2/2-Wegeventil ausgebildeten Halteventil 40 lässt sich auch eine Testfunktion für das Nutzfahrzeug realisieren, indem nämlich bei entlüftetem Federspeicheranschluss 46 über den Steueranschluss 28 der dort angeschlossene Steuereingang des Anhängersteuermoduls kurzzeitig belüftet wird. Die Belüftung dieses Steuereingangs hat ein Entlüften der Anhängerbremsanlage zur Folge, so dass das gesamte Nutzfahrzeug in diesem Zustand durch das Zugfahrzeug gehalten werden muss, wobei der entlüftete Zustand des Federspeicheranschlusses durch Umschalten des als 2/2-Wegeventil ausgebildeten Halteventils 40 in seine Druckhaltstellung aufrechterhalten werden kann.

Eine weitere wichtige Aufgabe übernimmt das 3/2-Wegeventil 20 im Hinblick auf die Streckbremsfunktion. Indem das 3/2-Wegeventil 20 pulsweitenmoduliert durch die elektronischen Steuereinheiten 12, 14 angesteuert wird, kann ein gezielter Druck am Steueranschluss 48 für das Anhängersteuermodul zur Verfügung gestellt werden. Insbesondere kann eine Bremsung des Anhängers unabhängig von der Bremsung des Zugfahrzeugs erfolgen, so dass ein Auflaufen des Anhängers auf das Zugfahrzeug vermieden werden kann. Ob eine solche Streckbremsung erlaubt ist, hängt vom Fahrzustand des Fahrzeugs ab. Indem dieser berücksichtigt wird, können sicherheitskritische Gesichtspunkte, beispielsweise Lenkmanöver, berücksichtigt werden, und es kann sichergestellt werden, dass eine Pulsweitenmodulation des 3/2-Wegeventils 20 nur dann erfolgt, wenn tatsächlich die Streckbremsfunktionalität benötigt wird, wodurch die Lebensdauer des 3/2-Wegeventils 20 stark erhöht wird. Die Überprüfung, ob die Pulsweitenmodulation des 3/2-Wegeventils 20 grundsätzlich zugelassen ist, wird von den Signalen A, B, C, D, E und F abhängig gemacht. Diese Signale kennzeichnen die folgenden Fahrzustände des Fahrzeugs, beziehungsweise sie sind von diesen Fahrzuständen abgeleitet, etwa durch Vergleiche mit Schwellenwerten:
A: Geschwindigkeit des Fahrzeugs
B: Motordrehmoment
C: Retarderstatusinformation
D: Lenkwinkel beziehungsweise Raddifferenzdrehzahl
E: Zustand der Schalter für Gaspedal und Motorbremse
F: Neigung
G: Fahrerwunsch-Gebersignal

Die Informationen über diese Fahrzustände lassen sich aus verschiedensten Quellen beziehen. Die Fahrzeuggeschwindigkeit kann beispielsweise aus dem Antiblockiersystem oder vom Tachographen des Fahrzeugs bezogen werden. Ebenfalls können aktive Raddrehzahlsensoren verwendet werden, da deren Signale insbesondere bei niedrigen Geschwindigkeiten genauer sind als dasjenige vom Tachographen. Zusätzlich können Geschwindigkeitswerte des Navigationssystems als Absolutwerte mit eingerechnet werden. Das Drehmoment des Motors steht beispielsweise im Rahmen der Motorsteuerung zur Verfügung. Für den Lenkwinkel beziehungsweise die Raddifferenzdrehzahl sind Raddrehzahlsensoren vorhanden. Grundsätzlich können die Signale direkt oder über einen Datenbus bezogen werden. Zur Erfassung der Neigung des Fahrzeugs ist insbesondere noch festzustellen, dass diese durch eine Sensorik erfasst werden kann; die Neigungsinformation kann aber auch durch das Navigationssystem zur Verfügung gestellt werden.

Die diskutierten und unter Umständen weitere Signale beziehungsweise davon abgeleitete Größen werden der Steuereinheit 12 eingegeben. Bei dieser kann es sich insbesondere um ein Steuergerät mit einer Watch-Dog-Funktion handeln. Eine Watch-Dog-Funktion ist nützlich, da es sich um eine sicherheitsrelevante Steuerfunktion handelt, bei der ein Mikrocontroller und ein Computersystem fehlersicher sein und sich im Fehlerfall zumindest teilweise abschalten müssen. Derartige Steuergeräte sind vorteilhafterweise redundant mit Strom versorgt, und sie haben einen Schreib-Lesespeicher, um die zulässigen Steuer- und Regelparameter sowie vorgegebene Schwellenwerte, beispielsweise einen Geschwindigkeitsschwellenwert, sowie Fehlerzustände zu speichern. Das Steuergerät kann außerhalb der elektropneumatischen Steuereinheit 34 angeordnet sein, oder auch in diese integriert sein, insbesondere in baulicher Einheit mit der innerhalb der elektropneumatischen Steuereinheit 34 dargestellten elektronischen Steuereinheit 14. In Abhängigkeit der Signale A, B, C, D, E und F veranlasst die elektronische Steuereinheit 12 nun die pulsweitenmodulierte Ansteuerung des 3/2-Wegeventils 20, wobei eine pulsweitenmodulierte Ansteuerung insbesondere dann unterbunden werden kann, wenn aufgrund eines oder mehrerer der der Steuereinheit zugeführten Informationen klar ist, das keine Streckbremsung stattfinden sollte.

Die elektropneumatische Steuereinheit 34 enthält ein weiteres elektrisch ansteuerbares 3/2-Wegeventil 60, das als bistabiles Ventil ausgestaltet ist. Dieses 3/2-Wegeventil 60 kann zum Beispiel als Magnetventil ausgelegt sein und beliefert den Steueranschluss 50 der elektropneumatischen Steuereinheit 34 mit Druckluft, so dass die dargestellte elektropneumatische Steuereinheit 34 einen Steuerdruck für das Anhängersteuermodul wahlweise auf der Grundlage einer monostabilen Ventilauslegung, nämlich über das 3/2-Wegeventil 20, oder einer bistabilen Ventilauslegung, nämlich über das 3/2-Wegeventil 60 zur Verfügung stellen kann. Die elektropneumatische Steuereinheit 34 kann somit verschiedenen Anforderungsprofilen der Nutzfahrzeughersteller gerecht werden. Anstelle eines Magnetventils kann als 3/2-Wegeventil 60 auch jedes andere bistabile 3/2-Wegeventil 60 verwendet werden. Zum Beispiel ist die Verwendung eines Schieberventils denkbar, welches aufgrund der beim Schalten auftretenden Reibung bistabil ist. Alternativ kann auch ein Ventil mit einer bistabilen Rastmechanik verwendet werden, die zum Beispiel in Form einer Kugelschreibermechanik ausgebildet sein kann.

Eine weitere nützliche Eigenschaft der elektropneumatischen Steuereinheit 34 steht mit den Drosseln 36, 38 in Beziehung, die in als Anhängersteuerleitungen 48', 50' bezeichneten Leitungspfaden zu den Steueranschlüssen 48, 50 zum Anhängersteuermodul vorgesehen sind. Tritt beispielsweise am Steueranschluss 48 ein unerwarteter Druckluftverlust auf, beispielsweise durch einen Leitungsbruch zwischen dem Steueranschluss 48 und einem nicht dargestellten Anhängersteuermodul, so kann die Drossel 36 sicherstellen, dass dies nicht zu einer schlagartigen Entlüftung des Federspeicheranschlusses 46 führt. Vielmehr wird sich stromaufwärts der Drossel 36 ein vom Drosselquerschnitt abhängiger Grenzdruck einstellen, sobald der kontinuierliche Druckverlust an dem Steueranschluss 48 der über die Druckluftversorgung 42 nachgelieferten Luftmenge entspricht. Aufgrund der Stauwirkung der Drossel 36 ist insbesondere auch ein Betätigen der Feststellbremse des Nutzfahrzeugs nach einer Inbetriebnahme einer zunächst drucklosen Bremsanlage, die einen derartigen Defekt aufweist. Der sich einstellende, beziehungsweise bei einer Inbetriebnahme erreichbare, Grenzdruck ist ausreichend hoch, um das Betätigen der Feststellbremse des Nutzfahrzeugs zu gewährleisten. Beispielsweise kann der Grenzdruck bei einem Versorgungsdruck von 10,5 bar 8,5 bar betragen und das notwendige Druckniveau zum Betätigen der Feststellbremse bei 8,0 bar liegen.

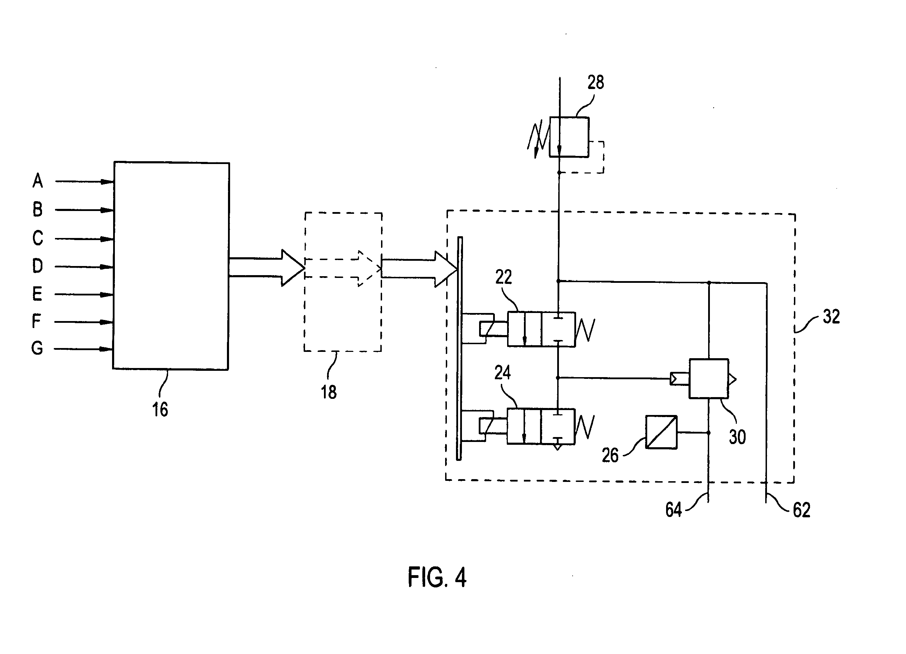

Figur 4 zeigt ein Blockschaltbild zur Erläuterung einer zweiten Ausführungsform einer Bremsanlage. Bei dem hier dargestellten Ausführungsbeispiel ist die pulsweitenmoduliert ansteuerbare Ventileinrichtung in das Anhängersteuermodul 32 integriert. Dieses weist einen Versorgungsleitungsanschluss 62 für den Anhänger und einen Anhängerbremsleitungsanschluss 64 auf. Die Versorgung des Anhängersteuermoduls 32 erfolgt wiederum über einen Druckbegrenzer 28, dem die pulsweitenmoduliert ansteuerbare Ventileinrichtung, hier zwei 2/2-Wegeventile 22, 24 aufweisend, nachgeschaltet ist. Die Ansteuerung der Ventileinrichtung 22, 24 erfolgt nach dem gleichen grundsätzlichen Prinzip, wie bereits im Zusammenhang mit Figur 3 erläutert wurde. Die Pulsweitenmodulation kann jedoch beispielsweise mit konstanter Pulslänge stattfinden, wobei zum Belüften der Anhängerbremsleitung das erste 2/2-Wegeventil 22 gepulst angesteuert wird, während das zweite 2/2-Wegeventil 24 stromlos bleibt, und zum Entlüften das zweite 2/2-Wegeventil 24 bei stromlosem erstem 2/2-Wegeventil 22 gepulst angesteuert wird. Zum Halten des Druckes bleiben beide 2/2-Wegeventile 22, 24 stromlos. Im vorliegenden Ausführungsbeispiel erfolgt die Druckversorgung der Anhängerbremsleitung über ein Relaisventil 30. Ebenfalls ist ein direkter Anschluss der Anhängerbremsleitung an die pulsweitenmoduliert ansteuerbaren Magnetventile 22, 24 denkbar. Weiterhin kann auch ein 3/2-Wegeventil anstelle der 2/2-Wegeventile zum Einsatz kommen. Im Hinblick auf den Drucksensor 26 ist zu erwähnen, dass dieser überwacht, ob der zum Anhänger ausgesteuerte Druck innerhalb eines zulässigen Regelfensters unter Einbeziehung der Vorgaben A bis G liegt. Weiterhin wird die Hysterese des Systems mit einbezogen. Es wird die Kontinuität des Druckanstieges mit Bezug auf die Toleranzen des Relaisventils 30 und in Abhängigkeit der Vorgaben A bis G berücksichtigt. Das Steuergerät 16 kann einen zusätzlichen elektrischen Anschluss aufweisen, über den ein am Steuergerät des Anhängers, beispielsweise dem Anhängersteuermodul 32, der Streckbremswunsch elektrisch weitergegeben wird.

Im Zusammenhang mit Figur 4 ist beispielhaft dargestellt, dass dem Steuergerät 16, das beispielsweise vergleichbar mit dem Steuergerät 12 gemäß Figur 3 aufgebaut sein kann, ein weiteres Steuergerät 18 nachgeschaltet sein kann, etwa ein dem Anhängersteuermodul eigenes Steuergerät, das als Slave-Steuergerät ausgelegt ist. Das Steuergerät 18 hat also beispielsweise keine CAN-Schnittstelle. Die Hauptrechenleistung wird von dem primären Steuergerät 16 vorgenommen, welches als redundantes Steuergerät mit redundanter Stromversorgung und einem EEProm-Speicher zur Parameter- und Schwellenwertabspeicherung sowie als Fehlerspeicher ausgelegt ist.

Die Lösung mit zwei 2/2-Wegeventilen mit einem nachgeschalteten Relaisventil oder ohne ein nachgeschaltetes Relaisventil ist auch im Zusammenhang mit der Integration der Streckbremsfunktionalität in die elektropneumatische Steuereinheit 34 gemäß Figur 3 möglich. Ebenfalls kann bei einer solchen elektropneumatischen Steuereinheit, wie sie in Figur 3 dargestellt ist, auch einem 3/2-Wegeventil ein Relaisventil nachgeschaltet werden.

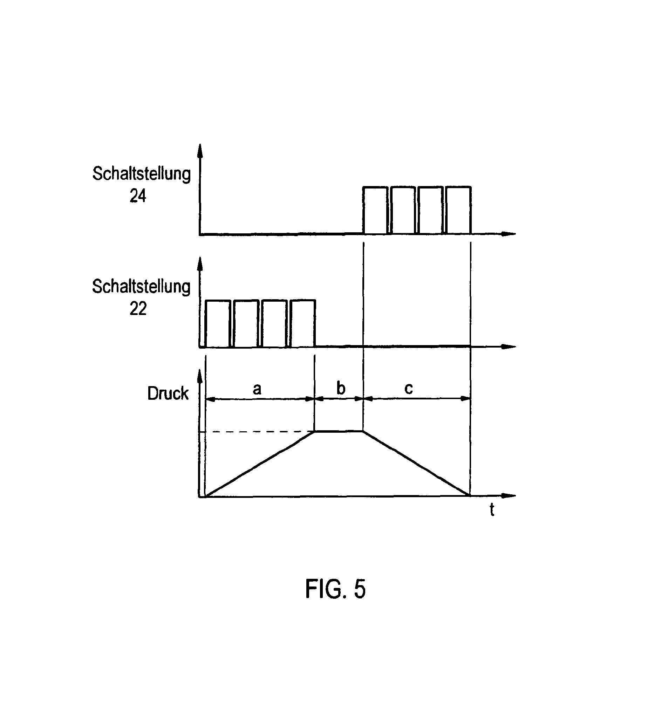

Figur 5 zeigt eine Diagrammdarstellung zur Erläuterung einer pulsweitenmodulierten Ansteuerung einer Ventileinrichtung. Hier sind die Schaltstellungen eines Belüftungsventils, beispielsweise des Ventils 22 gemäß Figur 4, und eines Entlüttungsventils, beispielsweise des Ventils 24 gemäß Figur 4, und die zugehörigen ausgesteuerten Druckverläufe, beispielsweise der dem Relaisventil 30 gemäß Figur 4 zugeführte Steuerdruck oder der von dem Relaisventil 30 am Anhängerbremsleitungsanschluss 64 zur Verfügung gestellte Arbeitsdruck dargestellt. Während des Druckaufbaus ist das Entlüftungsventil 24 permanent geschlossen, während das Belüftungsventil 22 gepulst angesteuert wird. Folglich kommt es zu einem Druckanstieg. Zum Druckhalten bleiben beide Ventile 22, 24 geschlossen. Während der Druckabbauphase bleibt das Druckaufbauventil 22 geschlossen, während das Entlüftungsventil 24 gepulst angesteuert wird und insofern seine Schaltstellung periodisch ändert.

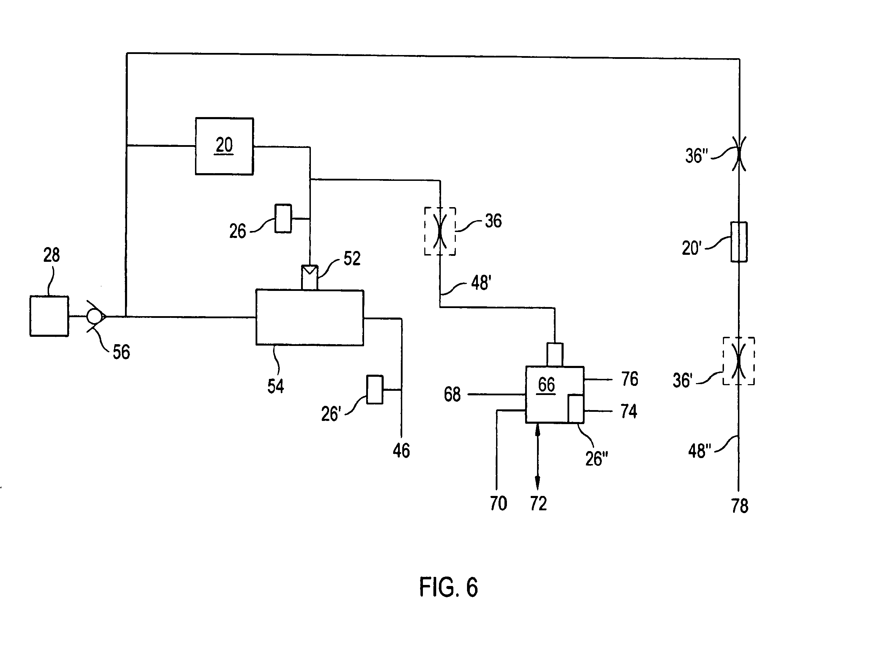

Figur 6 zeigt eine weitere Ausführungsform einer erfindungsgemäßen Bremsanlage. Die in Figur 6 dargestellte Bremsanlage ist in weiten Teilen mit der in Figur 3 dargestellten Bremsanlage identisch, weshalb im Folgenden nur auf Unterschiede eingegangen wird. Zwischen der Ventileinrichtung 20 und dem Steuereingang 52 des Relaisventils 54 wird auf ein Halteventil verzichtet, welches allerdings optional eingefügt werden kann. Die Ventileinrichtung 20 ist bei dieser Ausführungsform vorteilhafterweise selbst als bistabile 3/2-Wegeventil mit eigener Entlüftung ausgeführt und kann, muss jedoch nicht, pulsweitenmoduliert angesteuert werden. Die Bistabilität der Ventileinrichtung 20 kann dann beispielsweise mit Hilfe von Magneten in Form eines Magnetventils, durch Reibung in Form eines Schieberventils, welches sich nur unter einer äußeren Kraft bewegt, oder mit Hilfe einer mechanischen Rastung, zum Beispiel einer Kugelschreibermechanik, beziehungsweise auf irgendeine andere dem Fachmann bekannte Weise erfolgen. Der Drucksensor 26 ist, analog zu der Ausführungsform in Figur 3, geeignet, einen Druckabfall im Bereich der Anhängersteuerleitung 48' zu detektieren. An einem Ende der Anhängersteuerleitung 48' ist ein Anhängersteuermodul 66 dargestellt, das eingangsseitig über einen pneumatischen Anschluss 68, einen elektrischen Anschluss 70 und einen Anschluss an einen CAN-Bus 72 verfügt. Ausgangsseitig umfasst das Anhängersteuermodul 66 Anschlüsse für eine Anhängersteuerung 74 und einen Anhängerdruckluftvorrat 76. Innerhalb des Anhängersteuermoduls 66 ist ein Drucksensor 26" angeordnet, der der Anhängersteuerung 74 zugeordnet ist, und auf diese Weise indirekt auch einen Druckabfall in der Anhängersteuerleitung 48' erfassen kann. Weiterhin ist eine weitere Anhängersteuerleitung 48" mit weiteren Drosseln 36', 36" und einer weiteren Ventileinrichtung 20' dargestellt, über die ein Druckluftsteueranschluss 78 versorgt wird. Der Druckluftsteueranschluss 78 kann beispielsweise der Ansteuerung weiterer Anhänger dienen, wie dies bei Mehrfachanhängerzügen, zum Beispiel einem Road-Train, vorkommt. Die weitere Anhängersteuerleitung 48" ist in diesem Fall durch die weiteren Drosseln 36', 36" abgesichert, wobei nur eine der beiden Drosseln 36', 36" zur Absicherung gegen einen spontanen Druckverlust notwendig ist. Es wurden jedoch beide Drosseln 36', 36" eingezeichnet, um verschiedene Positionierungsmöglichkeiten bei einer zur Feststellbremsversorgung des Nutzfahrzeugs parallelen Steuerdruckentnahme aus einer Versorgungsleitung aufzuzeigen. Neben den beiden dargestellten Positionierungsmöglichkeiten vor beziehungsweise hinter der Ventileinrichtung 20' besteht auch die Möglichkeit die Drosselfunktionalität in die Ventileinrichtung 20' selbst zu integrieren. Die funktionale Auslegung der Ventileinrichtung 20' entspricht dabei im Wesentlichen der der Ventileinrichtung 20. Der Erfindungsgedanke kann auch mit verschieden verschatteten Ventileinrichtungen genutzt werden, die hier nicht explizit dargestellt sind. Wesentlich ist lediglich, dass sämtliche Versorgungsdrücke erst nach dem Rückschlagventil entnommen werden.

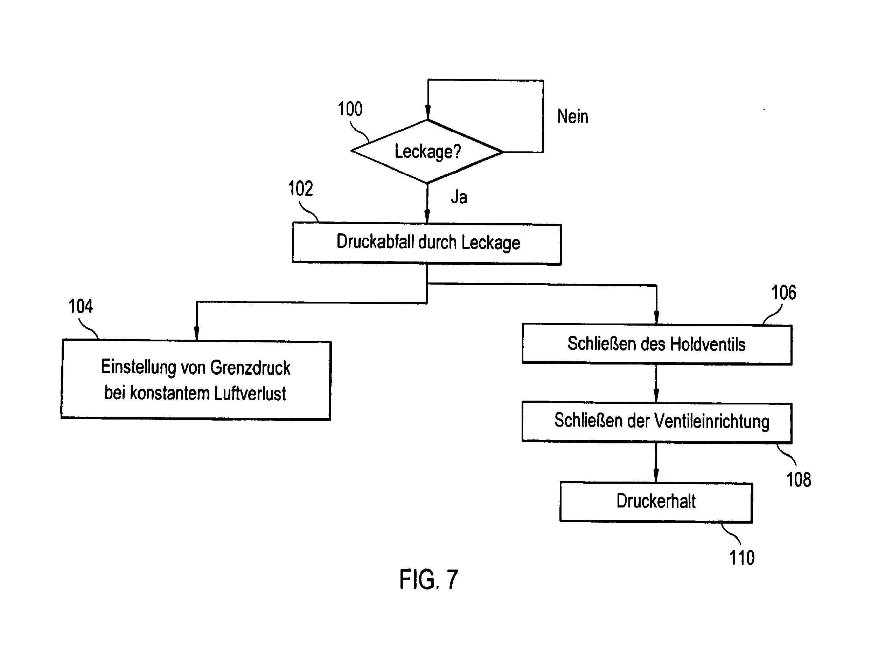

Figur 7 zeigt ein Flussdiagramm zur Veranschaulichung des erfindungsgemäßen Verfahrens. Dabei ist der Schritt 100, in welchem überprüft wird, ob eine Leckage in einer Anhängersteuerleitung vorliegt, Ausgangspunkt. Falls ja, 100-ja, erfolgt bei Schritt 102 zunächst ein gewisser Druckabfall durch die Leckage. Erst aufgrund des Druckabfalls ist die Leckage detektierbar. In Abhängigkeit von der Ausführungsform der Bremsanlage können nun unterschiedliche Abläufe eintreten. Entweder es stellt sich stromaufwärts der Drossel bei Schritt 104 ein Grenzdruck bei einem konstanten Luftverlust über die Leckage ein, oder es wird in den Schritten 106 und 108 zunächst das Halteventil und dann die Ventileinrichtung geschlossen. Die Einstellung eines Grenzdrucks bei konstantem Luftverlust in Schritt 104 erlaubt insbesondere auch das Betätigen beziehungsweise Geöffnethalten der Feststellbremse des Nutzfahrzeugs. Auch das Schließen des Halteventils in Schritt 106 erlaubt das Offenhalten der Feststellbremse des Nutzfahrzeugs. Durch das zusätzliche Schließen der Ventileinrichtung in Schritt 108 wird jedoch in Schritt 110 insofern ein Druckerhalt erreicht, als dass kein weiteres Luftvolumen über die Leckage ausströmen kann.

Die in der vorstehenden Beschreibung, in den Zeichnungen sowie in den Ansprüchen offenbarten Merkmale der Erfindung können sowohl einzeln als auch in beliebiger Kombination für die Verwirklichung der Erfindung wesentlich sein.

### Bezugszeichenliste:

- 10: Steuereinheit
- 12: Steuereinheit
- 14: Steuereinheit
- 16: Steuereinheit
- 18: Steuereinheit
- 20: Ventileinrichtung
- 20': weitere Ventileinrichtung
- 22: Ventileinrichtung
- 24: Ventileinrichtung
- 26: Drucksensor
- 26': Drucksensor
- 26": Drucksensor
- 28: Druckbegrenzer
- 30: Relaisventil
- 32: Anhängersteuermodul
- 34: Steuereinheit
- 36: Drossel
- 36': weitere Drossel
- 36": weitere Drossel
- 38: Drossel
- 40: Halteventil
- 42: Druckluftversorgung
- 44: Anhängersteueranschluss
- 46: Federspeicheranschluss
- 48: Steueranschluss

- 48': Anhängersteuerleitung
- 48": weitere Anhängersteuerleitung
- 50: Steueranschluss
- 50': Anhängersteuerleitung
- 52: Steuereingang
- 54: Relaisventil
- 56: Rückschlagventil
- 58: Druckschalter
- 60: 3/2-Wegeventil
- 62: Versorgungsleitungsanschluss
- 64: Anhängerbremsleitungsanschluss
- 66: Anhängersteuermodul
- 68: pneumatischer Anschluss
- 70: elektrischer Anschluss
- 72: CAN-Bus
- 74: Anhängersteuerung
- 76: Anhängerdruckluftvorrat
- 78: Druckluftsteueranschluss
- 100: Leckage
- 102: Druckabfall durch Leckage
- 104: Erreichen des Grenzdrucks
- 106: Schließen des Halteventils
- 108: Schließen der Ventileinrichtung
- 110: Druckerhalt

## Patentansprüche

1. Bremsanlage für ein mit einem Anhänger pneumatisch koppelbares Nutzfahrzeug, mit
- mindestens einer elektronischen Steuereinheit (10, 12, 14, 16, 18) und
- einer durch die mindestens eine elektronische Steuereinheit (10, 12, 14, 16, 18) elektrisch schaltbaren Ventileinrichtung (20), wobei in einem Schaltzustand der mindestens einen Ventileinrichtung (20) Druck für eine Anhängerbremsanlage aufbaubar ist, der eine Bremsung des Anhängers veranlasst,
**dadurch gekennzeichnet, dass** eine Drossel (36, 38) in einer Anhängersteuerleitung (48', 50') angeordnet ist, die bei einer Leckage stromabwärts der Drossel (36, 38) einen Druckabfall an einem Steuereingang (52) eines Relaisventils (54) begrenzt.

2. Bremsanlage nach Anspruch 1, **dadurch gekennzeichnet, dass** die Druckluftversorgung der Bremsanlage über einen Druckbegrenzer (28) erfolgt.

3. Bremsanlage nach Anspruch 1 oder 2, **dadurch gekennzeichnet, dass** ein Rückschlagventil (56) stromabwärts des Druckbegrenzers (28) zur gemeinsamen Absicherung der Feststellbremse des Nutzfahrzeugs und der Anhängerfeststellbremssteuerung angeordnet ist.

4. Bremsanlage nach einem der vorhergehenden Ansprüche, **dadurch gekennzeichnet, dass** die Druckluftversorgung der Feststellbremse des Zugfahrzeugs parallel zur Druckluftversorgung der Anhängerfeststellbremssteuerung erfolgt.

5. Bremsanlage nach einem der vorhergehenden Ansprüche, **dadurch gekennzeichnet, dass** ein Drucksensor (26) den Steuerdruck für die Anhängerbremsanlage erfasst und ein entsprechendes Signal an die elektronische Steuereinheit (10, 12, 14, 16, 18) übermittelt.

6. Bremsanlage nach einem der vorhergehenden Ansprüche, **dadurch gekennzeichnet, dass** ein Halteventil (40) zwischen der mindestens einen elektrisch schaltbaren Ventileinrichtung (20) und einem Relaisventil (54) angeordnet ist.

7. Verfahren zum Steuern einer Bremsanlage für ein mit einem Anhänger pneumatisch koppelbares Nutzfahrzeug, mit
- mindestens einer elektronischen Steuereinheit (10, 12, 14, 16, 18),
- einer durch die mindestens eine elektronische Steuereinheit (10, 12, 14, 16, 18) elektrisch schaltbaren Ventileinrichtung (20, 22, 24), wobei in einem Schaltzustand der Ventileinrichtung Druck für die Anhängerbremsanlage aufbaubar ist, der eine Bremsung des Anhängers veranlasst, und
- einer in einer Anhängersteuerleitung (48', 50') angeordneten Drossel (36, 38),
**dadurch gekennzeichnet, dass** ein bei einer stromabwärts der Drossel (36, 38) eingetretenen Leckage auftretender Druckabfall durch die Drossel (36, 38) begrenzt wird, wobei ein Steuereingang (52) eines Relaisventils (54) stromaufwärts von der Drossel (36, 38) angeordnet ist.

8. Verfahren nach Anspruch 7, **dadurch gekennzeichnet, dass** bei einer eingetretenen Leckage eine dem Steuereingang (52) vorgeordnete Ventileinrichtung (40) geschlossen wird, um einen Druckabfall an dem Steuereingang (52) zu vermeiden.

9. Verfahren nach Anspruch 7 oder 8, **dadurch gekennzeichnet, dass** die mindestens eine elektrisch schaltbare Ventileinrichtung (20, 22, 24) eine Druckluftnachförderung unterbricht, um bei einer eingetretenen Leckage einen kontinuierlichen Luftverlust zu stoppen.

10. Verfahren nach einem der Ansprüche 7 bis 9, **dadurch gekennzeichnet, dass** parallel zur Ausgabe des Drucksignals an den Steueranschlüssen (48, 50) ein entsprechendes elektrisches Steuersignal über einen CAN-Bus (72) gesendet wird.

11. Verfahren nach Anspruch 10, **dadurch gekennzeichnet,**
- **dass** das elektrische Steuersignal und das Drucksignal miteinander verglichen werden und
- **dass** eine Leckage über den CAN-Bus (72) gemeldet wird, falls die Signale nicht äquivalent sind.

12. Verfahren nach Anspruch 11, **dadurch gekennzeichnet, dass** bei nicht äquivalenten Signalen das elektrische Signal zur Steuerung des Anhängers herangezogen wird.

13. Verfahren nach einem der Ansprüche 7 bis 12, **dadurch gekennzeichnet, dass** bei einer eingetretenen Leckage ein elektrisches Signal an das Steuergerät (10, 12, 14, 16, 18) gesendet wird, um ein Einbremsen des Anhängers zu reduzieren beziehungsweise zu verhindern.

14. Verfahren nach einem der Ansprüche 7 bis 13, **dadurch gekennzeichnet, dass** eine Fehlerausgabe an den Fahrer des Nutzfahrzeugs erfolgt, wenn eine Leckage detektiert wird.

15. Verfahren nach einem der Ansprüche 7 bis 14, **dadurch gekennzeichnet, dass** ein Fehlereintrag in einem Fehlerspeicher erfolgt, wenn eine Leckage detektiert wird.

16. Verfahren nach einem der Ansprüche 7 bis 15, **dadurch gekennzeichnet, dass** eine Leckage in einer Anhängersteuerleitung (48', 50') über einen stromaufwärts der Drossel (36, 38) angeordneten Drucksensor (26) detektiert wird.

17. Verfahren nach einem der Ansprüche 7 bis 16, **dadurch gekennzeichnet, dass** eine Leckage in einer Anhängersteuerleitung (48', 50') über einen in einem Anhängersteuermodul (66) angeordneten Drucksensor (26") detektiert wird.

18. Verfahren nach einem der Ansprüche 7 bis 17, **dadurch gekennzeichnet, dass** eine Leckage in einer Anhängersteuerleitung (48', 50') über an einem Anhänger angeordnete Raddrehzahl detektiert wird.

## Claims

1. A braking system for a utility vehicle which can be coupled pneumatically to a trailer, having
- at least one electronic control unit (10, 12, 14, 16, 18) and
- a valve device (20) which can be switched electrically by the at least one electronic control unit (10, 12, 14, 16, 18), wherein in a switched state of the at least one valve device (20) pressure can be built up for a trailer braking system, which pressure brings about braking of the trailer,
**characterized in that** a throttle (36, 38) is arranged in a trailer control line (48', 50') which, in the event of a leak downstream of the throttle (36, 38), limits a pressure drop at a control inlet (52) of a relay valve (54).

2. The braking system as claimed in claim 1, **characterized in that** the compressed air supply of the braking system is provided by means of a pressure limiter (28).

3. The braking system as claimed in claim 1 or 2, **characterized in that** a non-return valve (56) is arranged downstream of the pressure limiter (28) in order to jointly protect the parking brake of the utility vehicle and the trailer parking brake control system.

4. The braking system as claimed in one of the preceding claims, **characterized in that** the compressed air supply of the parking brake of the traction vehicle is provided in parallel with the compressed air supply of the trailer parking brake control system.

5. The braking system as claimed in one of the preceding claims, **characterized in that** a pressure sensor (26) senses the control pressure for the trailer braking system and transmits a corresponding signal to the electronic control unit (10, 12, 14, 16, 18).

6. The braking system as claimed in one of the preceding claims, **characterized in that** a hold valve (40) is arranged between the at least one electrically switchable valve device (20) and a relay valve (54).

7. A method for controlling a braking system for a utility vehicle which can be coupled pneumatically to a trailer, having
- at least one electronic control unit (10, 12, 14, 16, 18),
- a valve device (20, 22, 24) which can be switched electrically by the at least one electronic control unit (10, 12, 14, 16, 18), wherein in a switched state of the valve device pressure can be built up for the trailer braking system, which pressure brings about braking of the trailer, and
- a throttle (36, 38) which is arranged in a trailer control line (48', 50'),
**characterized in that** a pressure drop which occurs when there is a leak downstream of the throttle (36, 38) is limited by the throttle (36, 38), wherein a control inlet (52) of a relay valve (54) is arranged upstream of the throttle (36, 38).

8. The method as claimed in claim 7, **characterized in that** when a leak has occurred a valve device (40) which is arranged upstream of the control inlet (52) is closed in order to avoid a pressure drop at the control inlet (52).

9. The method as claimed in claim 7 or 8, **characterized in that** the at least one electrically switchable valve device (20, 22, 24) interrupts further feeding-in of compressed air in order to stop a continuous loss of air when a leak has occurred.

10. The method as claimed in one of claims 7 to 9, **characterized in that**, in parallel with the outputting of the pressure signal at the control ports (48, 50), a corresponding electrical control signal is transmitted via a CAN bus (72).

11. The method as claimed in claim 10, **characterized**
- **in that** the electrical control signal and the pressure signal are compared with one another, and
- **in that** a leak is reported via the CAN bus (72) if the signals are not equivalent.

12. The method as claimed in claim 11, **characterized in that** when signals are not equivalent the electrical signal is used to control the trailer.

13. The method as claimed in one of claims 7 to 12, **characterized in that** when a leak has occurred an electrical signal is transmitted to the control device (10, 12, 14, 16, 18) in order to reduce or to prevent braking of the trailer.

14. The method as claimed in one of claims 7 to 13, **characterized in that** a fault message is output to the driver of the utility vehicle if a leak is detected.

15. The method as claimed in one of claims 7 to 14, **characterized in that** a fault entry is made in a fault memory if a leak is detected.

16. The method as claimed in one of claims 7 to 15, **characterized in that** a leak in a trailer control line (48', 50') is detected by means of a pressure sensor (26) which is arranged upstream of the throttle (36, 38).

17. The method as claimed in one of claims 7 to 16, **characterized in that** a leak in a trailer control line (48', 50') is detected by means of a pressure sensor (26") which is arranged in a trailer control module (66).

18. The method as claimed in one of claims 7 to 17, **characterized in that** a leak in a trailer control line (48', 50') is detected by means of a wheel speed which is arranged on a trailer.

## Revendications

1. Système de freinage pour un véhicule utilitaire pouvant être attelé pneumatiquement à une remorque, comprenant
- au moins une unité (10, 12, 14, 16 18) électronique de commande, et
- un dispositif (20) de vanne pouvant être commuté électriquement par la au moins une unité (10, 12, 14, 16, 18) électronique de commande, dans lequel, dans un état de commutation du au moins un dispositif (20) de vanne, de la pression pour un système de freinage de remorque peut être établie, pression qui provoque un freinage de la remorque, **caractérisé en ce qu'**un étranglement (36, 38) est disposé dans un conduit (48', 50') de commande de remorque, conduit qui, s'il se produit une fuite en aval de l'étranglement (36, 38), limite une chute de pression sur une entrée (52) de commande d'une vanne (54) de relais.

2. Système de freinage suivant la revendication 1, **caractérisé en ce que** l'alimentation en air comprimé du système de freinage s'effectue par un limiteur (28) de pression.

3. Système de freinage suivant la revendication 1 ou 2, **caractérisé en ce qu'**un clapet antiretour (56) est monté en aval du limiteur (28) de pression pour la protection commune du frein de stationnement du véhicule utilitaire et de la commande de frein de stationnement de la remorque.

4. Système de freinage suivant l'une des revendications précédentes, **caractérisé en ce que** l'alimentation en air
comprimé du frein de stationnement du véhicule de traction s'effectue parallèlement à l'alimentation en air comprimé de la commande du frein de stationnement de la remorque.

5. Système de freinage suivant l'une des revendications précédentes, **caractérisé en ce qu'**un capteur (26) de pression détecte la pression de commande pour le système de freinage de la remorque et transmet un signal correspondant à l'unité (10, 12, 14, 16, 18) électronique de commande.

6. Système de freinage suivant l'une des revendications précédentes, **caractérisé en ce qu'**une vanne (40) d'arrêt est montée entre le au moins un dispositif (20) de vanne pouvant être commuté électriquement et une vanne (54) de relais.

7. Procédé de commande d'un système de freinage pour un véhicule utilitaire pouvant être attelé pneumatiquement à une remorque, comprenant
- au moins un dispositif (10, 12, 14, 16 18) électronique de commande,
- un dispositif (20) de vanne pouvant être commuté électriquement par la au moins une unité (10, 12, 14, 16, 18) électronique de commande, dans lequel, dans un état de commutation du au moins un dispositif (20) de vanne, de la pression pour un système de freinage de remorque peut être établie, pression qui provoque un freinage de la remorque, et
- un étranglement (36, 38) disposé dans un conduit (48', 50') de commande de la remorque,
**caractérisé en ce qu'**on limite par l'étranglement (36, 38) une chute de pression survenant s'il se produit une fuite en aval de l'étranglement (36, 38), une entrée (52) de commande d'une vanne (54) de relais étant montée en amont de l'étranglement (36, 38).

8. Procédé suivant la revendication 7, **caractérisé en ce que**, s'il se produit une fuite, on ferme un dispositif (40) de vanne monté avant l'entrée (52) de commande pour empêcher une chute de pression à l'entrée 52) de commande.

9. Procédé suivant la revendication 7 ou 8, **caractérisé en ce que** le au moins un dispositif (20, 22, 24) de vanne pouvant être commuté électriquement interrompt une demande en plus d'air comprimé pour arrêter une perte d'air continue s'il se produit une fuite.

10. Procédé suivant l'une des revendications 7 à 9, **caractérisé en ce que**, en parallèle à l'émission du signal de pression aux bornes (48, 50) de commande, un signal électrique de commande correspondant est émis sur un bus (72) CAN.

11. Procédé suivant la revendication 10, **caractérisé en ce que**,
- on compare le signal électrique de commande et le signal de pression entre eux, et
- on annonce une fuite par le bus (72) CAN, si les signaux ne sont pas équivalents.

12. Procédé suivant la revendication 11, **caractérisé en ce que**, si les signaux ne sont pas équivalents, on tire parti du signal électrique pour la commande de la remorque.

13. Procédé suivant l'une des revendications 7 à 12, **caractérisé en ce que**, s'il se produit une fuite, on envoie un signal électrique à l'appareil (10, 12, 14, 16 18) électronique de commande pour réduire ou empêcher un freinage de la remorque.

14. Procédé suivant l'une des revendications 7 à 13, **caractérisé en ce que** l'on indique une panne au conducteur du véhicule utilitaire, si une fuite est détectée.

15. Procédé suivant l'une des revendications 7 à 14, **caractérisé en ce que** l'on enregistre une panne dans une mémoire de panne, si une fuite est détectée.

16. Procédé suivant l'une des revendications 7 à 15, **caractérisé en ce que** l'on détecte une fuite dans un conduit (48', 50') de commande de la remorque par un capteur (26) de pression monté en amont de l'étranglement (36, 38).

17. Procédé suivant l'une des revendications 7 à 16, **caractérisé en ce que** l'on détecte une fuite dans un conduit (48', 50') de commande de la remorque par un capteur (26') de pression monté dans un module (66) de commande de la remorque.

18. Procédé suivant l'une des revendications 7 à 17, **caractérisé en ce que** l'on détecte une fuite dans un conduit (48', 50') de commande de la remorque par une vitesse de rotation d'une roue montée sur la remorque.
